## Europäisches Patentamt

## European Patent Office

## Office européen des brevets

(19)

(11) **EP 1 121 724 B1**

(12) **EUROPÄISCHE PATENTSCHRIFT**

(45) Veröffentlichungstag und Bekanntmachung des
Hinweises auf die Patenterteilung:
**10.04.2002 Patentblatt 2002/15**

(21) Anmeldenummer: **99955712.7**

(22) Anmeldetag: **11.09.1999**

(51) Int Cl.⁷: **H01M 8/12**, H01M 8/06

(86) Internationale Anmeldenummer:
**PCT/DE99/02932**

(87) Internationale Veröffentlichungsnummer:
**WO 00/16423 (23.03.2000 Gazette 2000/12)**

(54) **FESTOXIDBRENNSTOFFZELLE BETRIEBEN MIT BRENNSTOFFÜBERSCHUSS**

FUEL CELL WHICH OPERATES WITH AN EXCESS OF FUEL

CELLULE ELECTROCHIMIQUE FONCTIONNANT AVEC UN EXCEDANT DE COMBUSTIBLE

(84) Benannte Vertragsstaaten:
**AT BE CH CY DE DK ES FI FR GB GR IE IT LI LU
MC NL PT SE**

(30) Priorität: **14.09.1998 DE 19841970
02.09.1999 DE 19941724**

(43) Veröffentlichungstag der Anmeldung:
**08.08.2001 Patentblatt 2001/32**

(73) Patentinhaber: **FORSCHUNGSZENTRUM JÜLICH
GMBH
52425 Jülich (DE)**

(72) Erfinder: **THOM, Frank
D-52353 Düren (DE)**

(56) Entgegenhaltungen:
EP-A- 0 311 307         DE-A- 19 634 085
DE-A- 19 636 738        DE-C- 19 636 068
FR-A- 2 061 548

• DATABASE COMPENDEX [Online]
ENGINEERING INFORMATION, INC., NEW
YORK, NY, US ALQAHTANY HAYTHAM ET AL:
"Methane steam reforming over Fe electrodes in
a solid electrolyte cell" Database accession no.
EIX93111693412 XP002133662 & ENERGY
FUELS;ENERGY & FUELS JUL-AUG 1993, Bd. 7,
Nr. 4, Juli 1993 (1993-07), Seiten 495-504,

• ALQAHTANY H ET AL: "SYNTHESIS GAS
PRODUCTION FROM METHANE OVER AN IRON
ELECTRODE IN A SOLID ELECTROLYTE CELL"
JOURNAL OF THE ELECTROCHEMICAL
SOCIETY,US,ELECTROCHEMICAL SOCIETY.
MANCHESTER, NEW HAMPSHIRE, Bd. 140, Nr.
6, 1. Juni 1993 (1993-06-01), Seiten 1677-1681,
XP000378121 ISSN: 0013-4651

**Beschreibung**

Die Erfindung betrifft ein Verfahren zum Betreiben einer Brennstoffzelle.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, so beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur bis zu 1000 °C beträgt. An der Kathode einer Hochtemperaturbrennstoffzelle bilden sich in Anwesenheit des Oxidationsmittels Sauerstoffionen. Die Sauerstoffionen passieren den Elektrolyten und kombinieren auf der Anodenseite mit dem vom Brennstoff stammenden Wasserstoff und/oder Kohlenmonoxid. Es werden Elektronen freigesetzt und so elektrische Energie erzeugt. Diese elektrochemischen Reaktionen verlaufen stark exotherm.

Die Betriebstemperatur einer PEM-Brennstoffzelle liegt bei ca. 80 °C. An der Anode einer PEM-Brennstoffzelle bilden sich in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt.

Mehrere Brennstoffzellen werden in der Regel zur Erzielung großer elektrischer Leistungen durch verbindende Elemente elektrisch und mechanisch miteinander verbunden. Ein Beispiel für ein solches verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt.

Als Brennstoff kann unter anderem Methan oder Methanol vorgesehen werden. Die genannten Brennstoffe werden durch Reformierung oder Oxidation u. a. in Wasserstoff oder wasserstoffreiches Gas umgewandelt.

Aus der Druckschrift DE 195 198 47 C1 ist bekannt, Brennstoff wie Methan intern, das heißt unmittelbar an bzw. innerhalb der Anode einer SOFC-Brennstoffzelle zu reformieren. Alternativ wird Brennstoff im Inneren eines Brennstoffzellenstapels in zusätzlichen Kammern reformiert (integrierte Reformierung). Die endotherme Reformierungsreaktion soll bei der internen bzw. integrierten Reformierung die benötigte Wärme durch die exothermen elektrochemischen Reaktionen beziehen. Gute Wirkungsgrade sollen so erhalten werden.

Der Druckschrift DE 196 46 354 A1 ist zu entnehmen, daß Brennstoff wie Methanol an der Anode einer PEM-Brennstoffzelle mittels eines Katalysators, wie Platin, oxidiert werden kann und so Wasserstoff freigesetzt wird. Die Wirkungen sind mit denen der internen bzw. integrierten Reformierung vergleichbar.

Es ist praktisch nicht möglich, einen Brennstoff, wie zum Beispiel Wasserstoff und/oder Kohlenmonoxid, in einer Brennstoffzelle vollständig in Strom umzuwandeln. Stets wird das Abgas, das aus dem Anodenraum einer Brennstoffzelle austritt, einen Rest der oben genannten, elektrochemisch aktiven Brennstoffe enthalten. Dieser Rest beträgt einige Stoffmengenanteile. Es ist bisher das Bestreben der Fachwelt, diesen Rest an Brennstoff im Abgas zu minimieren.

Ein Maß dafür ist der Brennstoffnutzungsgrad, der wie folgt definiert ist:

$$BN\,[\%] = 1 - \frac{(2\,\dot{n}_{H2} + 2\,\dot{n}_{CO} + 8\dot{n}_{CH4})_{Austrill}}{(2\,\dot{n}_{H2} + 2\,\dot{n}_{CO} + 8\dot{n}_{CH4})_{Eintritt}}$$

wobei $\dot{n}$ die entsprechenden Molenströme in mol/h angibt.

Aus EP 0 398 111 A ist eine Brennstoffzellenvorrichtung bekannt, bei der sowohl $O_2$ und Ballastgase als auch Brennstoff im Überschuß in die Brennstoffzelle eingeleitet werden, und die Gase teilweise im Kreislauf geführt werden. Damit werden Brennstoffnutzungsgrade von ca. 90 % realisiert.

Bei der aus DE 690 06 458 T2 bekannten Karbonatbrennstoffzelle wird Erdgas intern innerhalb von Kühlplatten reformiert, die sich innerhalb der Brennstoffzelle befinden. Der so erzielte Brennstoffnutzungsgrad erreicht dabei ca. 85 %.

Es ist ferner bekannt, in eine SOFC-Brennstoffzelle mit interner Reformierung vorreformierten Brennstoff einzuleiten. Brennstoff wie Erdgas, dessen Hauptbestandteil Methan darstellt, wird zum Teil extern reformiert. Ein Gemisch aus Methan und dem durch Vorreformierung erhaltenen wasserstoffreichen Synthesegas wird einer Brennstoffzelle zugeführt. In der Brennstoffzelle wird das im Gemisch enthaltene Methan ebenfalls in ein wasserstoffreiches Synthesegas umgewandelt. Durch Vorreformierung sollen die höheren Kohlenwasserstoffe zersetzt werden. Diese sind nämlich nachteilhaft thermisch instabil und zerfallen leicht unter Rußbildung. Neben den höheren Kohlenwasserstoffen reagiert aber auch Methan selbst zu Ruß, insbesondere durch thermisches Cracken von Methan:

$$CH_{4(g)} \Leftrightarrow 2H_{2(g)} + C_{(s)}$$

Diese Reaktion läuft bevorzugt bei Temperaturen oberhalb von 650 °C ab [J. R. Rostrup-Nielsen, Catalytic Steam Reforming, Springer-Verlag, 1984]. Die Rußbildung soll in der Brennstoffzelle vorteilhaft vermieden werden.

Ein externes Verfahren zur Wasserstofferzeugung mittels katalytischer Reformierung weist den Nachteil auf, daß ein hoher Wärmebedarf für die Reformierung gedeckt werden muß. Der Wärmebedarf wird z. B. durch zusätzliches Verbrennen von Kohlenwasserstoffen bereitgestellt. Das Verfahren ist daher relativ teuer.

Die in einer Brennstoffzelle ablaufenden endothermen Reaktionen vermögen die mit den exothermen elektrochemischen Reaktionen einhergehenden Wärmeentwicklungen nicht zu kompensieren. Stets weist beim Stand der Technik der Wärmehaushalt in einer Brennstoffzelle einen Wärmeüberschuß auf. Eine Brennstoffzelle muß daher mit Hilfe eines Kühlmittels gekühlt werden, wie zum Beispiel der Druckschrift DE 196 36 908 A1 zu entnehmen ist. Bei der Hochtemperaturbrennstoffzelle müssen beträchtliche Kühlluftmengen aufgebracht werden, um die durch die elektrochemischen Reaktionen freigesetzten Energiemengen abzuführen, wie den Druckschriften "Fuel Cell Systems L. Blomen, M. Mugerwa, Plenum Press, 1993" oder "Optimization of a 200 KW SOFC cogeneration plant. Part II: variation of the flowsheet; E. Riensche, J. Meusinger, U. Stimming, G. Unverzagt; Journal of Power Sources 71 (1998),pp. 306-314" zu entnehmen ist. Dies führt zu starken Wirkungsgradeinbußen und steigenden Stromerzeugungskosten. Eine Brennstoffzelle zu kühlen, erfordert Energie. Der Wirkungsgrad einer Brennstoffzelle verschlechtert sich entsprechend. Vorteilhaft wäre eine isotherme Verfahrensführung anzustreben, bei der der Wärmehaushalt der Brennstoffzelle ausgeglichen ist.

Aus dem Stand der Technik sind Kombinationsverfahren bekannt, bei dem zur Ausnutzung der Abwärme einer Brennstoffzelle beispielsweise eine Brennstoffzelle und eine Wärmekraftmaschine gekoppelt werden (DE 196 36 738 A1), oder auch eine Brennstoffzelle mit einer Gasturbine (DE 40 32 993 C1).

Ein Herstellungsverfahren für hochreinen Wasserstoff bzw. Synthesegas unter Einbeziehung einer Brennstoffzelle ist auch aus DE 196 36 068 C1 bekannt. Bei diesem Verfahren wird der isolierte Reaktionsraum für die Reformierung in thermischen Kontakt mit dem Inneren einer Hochtemperaturbrennstoffzelle gebracht, die bei 300 °C, vorteilhaft aber oberhalb von 500 °C betrieben werden.

In Anlehnung an die Druckschrift "Ch. Rechenauer, E. Achenbach Dreidimensionale mathematische Modellierung des stationären und instationären Verhaltens oxidkeramischer Hochtemperatur-Brennstoffzellen Jül-2752" sind bekannte typische Betriebsdaten einer einzelnen Brennstoffzelle in der folgenden Tabelle angegeben.

| | Kühlung durch Luft |
|---|---|
| Mittlere Stromdichte [mA/cm$^2$] | 300 |
| Zellspannung [V] | 0,72 |
| Brenngasnutzungsgrad [%]: | 80,5 |
| Aktive Elektrodenfläche [cm$^2$] | 78,2 |
| Gaseintrittstemperaturen [°C] | 750 |
| Gesamtdruck [bar]: | 1,5 |
| Luft-Austrittstemperatur [°C] | 851,7 |
| Wasserdampf-Methan-Verhältnis | 2,9 |
| Erdgas-Vorreformierungsgrad [%] | 30 |
| Luftstrom: Luftverhältnis [-] | 6,8 |
| | |
| Brenngasstrom [mol/h](Eintritt) | 0,938 |
| Stoffmengenanteile: (Eintritt) | |
| $CH_4$ | 0,131 |
| $H_2O$ | 0,487 |
| $H_2$ | 0,269 |
| CO | 0,025 |
| $CO_2$ | 0,053 |
| $N_2$ | 0,035 |
| Brenngasstrom [mol/h](Austritt) | 1,188 |

(fortgesetzt)

| | Kühlung durch Luft |
|---|---|
| Stoffmengenanteile: (Austritt) | |
| $CH_4$ | -- |
| $H_2O$ | 0,705 |
| $H_2$ | 0,102 |
| CO | 0,024 |
| $CO_2$ | 0,143 |
| $N_2$ | 0,026 |

Aufgabe der Erfindung ist die Schaffung eines Verfahrens, das eine verbesserte Nutzung, insbesondere der Abwärme, einer Brennstoffzelle ermöglicht.

Die Aufgabe wird durch ein Verfahren mit den Merkmalen des Anspruchs 1 gelöst. Vorteilhafte Ausgestaltungen ergeben sich aus den Unteransprüchen.

Verfahrensgemäß wird ein kohlenwasserstoffhaltiger Brennstoff wie Methanol, Methan oder Ethanol in das Innere der Brennstoffzelle eingeleitet und hier durch endotherme Reaktionen in ein Synthesegas umgewandelt. Das Synthesegas wird zum Teil durch exotherme elektrochemische Reaktionen in Strom umgewandelt. Der Teil des Synthesegases, der in der Brennstoffzelle nicht in Strom umgewandelt werden konnte, kann nach dem Verlassen der Brennstoffzelle in einem Behälter aufgefangen und/oder einer Gasaufbereitungeinheit, die Apparate zur Gasreinigung und/oder Gastrennung umfaßt, zugeführt und/oder in einer weiteren Brennstoffzelle zur Stromerzeugung genutzt werden.

Im Unterschied zum Stand der Technik wird ein zu reformierender Brennstoff mit hohem Überschuß der Brennstoffzelle zugeführt. Hierunter ist zu verstehen, daß im Vergleich zum genannten Stand der Technik wesentlich mehr zu reformierender Brennstoff der Brennstoffzelle zugeführt wird, als diese in Strom umwandeln kann. Ziel ist die Vermeidung einer zusätzlichen Kühlung der Brennstoffzelle. Der Überschuß ist daher insbesondere so zu wählen, daß eine Kühlung durch für die Stromerzeugung nicht benötigte Luft oder andere flüssige oder gasförmige Kühlmittel im wesentlichen vermieden wird.

Der Wärmeentzug durch endotherme Reaktionen wird erfindungsgemäß an die Wärmeerzeugung durch exotherme Reaktionen in einer Brennstoffzelle in verbesserter Weise angenähert. Eine besondere Maßnahme zur Kühlung, die keinen weitergehenden Nutzen zur Folge hat, wird so reduziert oder im Idealfall völlig vermieden.

Eine Brennstoffzelle wird beispielsweise mit vorreformiertem Erdgas betrieben. Bei dieser sei der Stoffmengenanteil von Methan beim Eintritt in die Brennstoffzelle > 10%. Ein hoher Überschuß im Sinne der Erfindung liegt bei dieser Brennstoffzelle z. B. vor, wenn beim Austritt aus der Brennstoffzelle der Molanteil von Wasserstoff mindestens 20% und der Molanteil an Methan weniger als 5% beträgt. Ein hoher Überschuß im Sinne der Erfindung liegt insbesondere dann vor, wenn beim Austritt aus der Brennstoffzelle der Molanteil von Wasserstoff mindestens 40% und der Molanteil an Methan weniger als 5% beträgt. Der Brennstoffnutzungsgrad liegt unterhalb von 40 %, vorteilhaft sogar unter 30 %. Der zugeführte Sauerstoff (bzw. Luft) wird vorzugsweise praktisch bis auf den stöchiometrischen Mindestbedarf zur Stromerzeugung herabgesetzt. Eine Kühlung durch flüssige oder gasförmige Kühlmittel (zusätzliche zu den vorgenannten Betriebsmitteln) entfällt im Idealfall. Ein geeignet eingestellter Brennstoffüberschuß bewirkt vorteilhaft in Kombination mit einer minimierten Sauerstoffzuführung eine isotherme Betriebsweise der Brennstoffzelle, so daß Eintrittsund Austrittstemperatur annähernd gleich sind und ein Temperaturgradient innerhalb der Brennstoffzelle vermieden wird. Dies läßt sich z. B. durch einen sehr gut wärmeleitenden metallischen Interkonnektor aus Stahl (1.4742) realisieren.

Der Überschuß wird vorzugsweise so eingestellt, daß die aus den exothermen, elektrochemischen Reaktionen resultierende Wärme zu wenigstens 80 %, vorteilhaft vollständig, für die endotherme Methan-Reformierung in der Anode genutzt wird. Die Wärmeenergie wird so im Vergleich zum Stand der Technik wesentlich besser genutzt. Sie wird beim anspruchsgemäßen Verfahren sowohl für die Strom- als für die Wasserstofferzeugung bzw. Synthesegaserzeugung planmäßig genutzt.

Im folgenden wird die Erfindung anhand eines Beispiels näher erläutert.

Als Edukt wird Erdgas verwendet, welchem Wasserdampf in dem Maße zugeführt wird, so daß eine Rußbildung ausgeschlossen werden kann. Um eine vorgegebene, mittlere flächenspezifische Stromdichte in einem einzelnen Hochtemperaturbrennstoffzellenstapel zu gewährleisten, ist eine theoretische Mindestmenge (Luft)-Sauerstoff erforderlich, die mit einer stöchiometrischen Mindestmenge an Brennstoff korreliert.

Ziel ist es, eine nahezu isotherme Betriebsweise bei gleichzeitig möglichst stöchiometrischer Sauerstoffzufuhr zu erreichen.

Der zugeführte Sauerstoff (bzw. Luft) wird dazu nahezu bis auf den stöchiometrischen Mindestbedarf herabgesetzt. Das anodenseitig zugeführte, evtl. teilweise vorreformierte Brenngas wird in einem solchen Überschuß zugeführt, daß sich ein Brennstoffnutzungsgrad von mindestens 40%, vorteilhafter von mindestens 30%, einstellt. Das Methan wird katalytisch innerhalb der Hochtemperaturbrennstoffzelle, d.h. unmittelbar in bzw. an der Anode zu Wasserstoff und Kohlenmonoxid umgesetzt, diese aber weitgehend nicht weiter elektrochemisch umgewandelt. Durch die endotherme Methan-Reformierung wird die freigesetzte Reaktionswärme der Elektrochemie aufgebraucht. Der Hochtemperaturbrennstoffzellenstapel wird vorteilhaft so betrieben, daß die gesamte elektrochemische Energie durch eine interne Methan-Reformierung aufgebraucht wird. Das anodenseitige an Wasserstoff und Kohlenmonoxid angereicherte Abgas kann einem weiteren Hochtemperaturbrennstoffzellenstapel zugeführt werden oder auch für eine weitere Verwendung außerhalb der Brennstoffzelle genutzt werden. Dazu können sich vorteilhaft beispielsweise Gasreinigungsoder Gastrennungsanlagen und/oder Speicherungen der anfallenden Gase an den Brennstoffzellenbetrieb anschließen. Ferner kann es mit der kathodenseitig geführten Luft anschließend verbrannt werden (Nachbrenner, Kessel, Feuerraum), so daß eine über den Stand der Technik hinausgehende Auskopplung von Hochtemperaturwärme möglich ist, die z. B. für einen nachgeschalteten Gasturbinenprozeß und/oder Dampfturbinenprozeß bereitgestellt werden kann.

Die Einspeisung von Brenngas im Überschuß ermöglicht eine effiziente Nutzung der elektrochemischen Reaktionswärme und eine vermehrte Auskopplung von Hochtemperaturwärme als dies bisher gemäß dem Stand der Technik möglich ist.

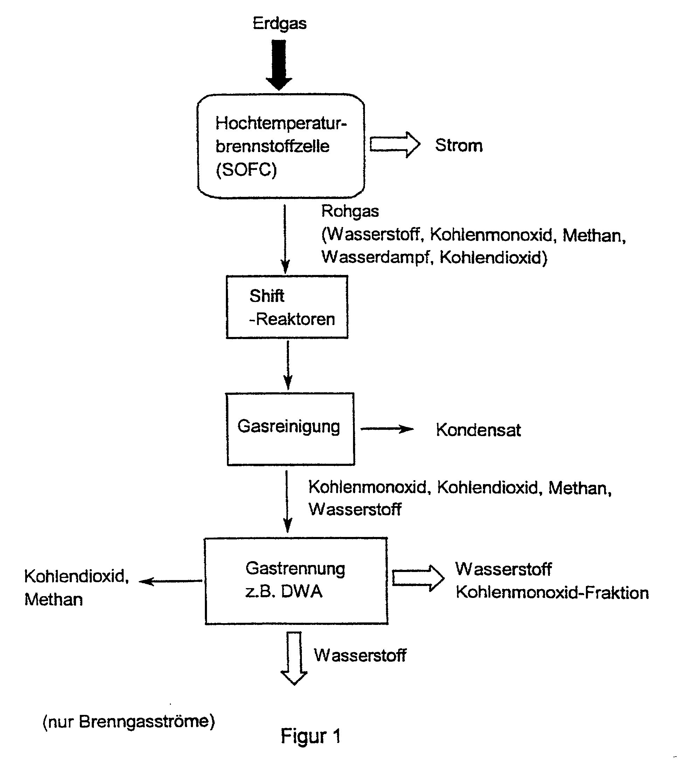

Figur 1 verdeutlicht ein erfindungsgemäßes Beispiel zur Strom- und Wassertoffproduktion.

Es werden ein oder mehrere Hochtemperaturbrennstoffzellenstapel eingesetzt, denen ein Vorreformer zur Umsetzung der höheren Kohlenwasserstoffe vorgeschaltet sein kann. Diesen werden Betriebsmittel in der aus dem vorhergehenden Beispiel bekannten Weise zugeführt. Der Brenngasüberschuß kann sogar so erhöht werden, daß Wärme den Brennstoffzellen zugeführt werden muß, um eine weitere interne Reformierung zu gewährleisten. Diese Betriebsweise ist dann sinnvoll, wenn der Wasserstoffanteil im anodenseitigen Abgas sehr hoch sein soll (z. B. > 46 %).

Das so erhaltene Rohgas (Abgas) wird als Ausgangsprodukt für eine nachgeschaltete Produktion von Wasserstoff und oder wasserstoffreichen Gasen benutzt. Zur Aufbereitung von Rohgasen sind gemäß dem Stand der Technik z. B. Tieftemperaturverfahren möglich. Große Reinheiten (Molanteil $H_2$ >> 0.99) und hohe Ausbeuten können z.B. durch Waschverfahren und Adsorptionsverfahren erzielt werden ("Ullmann's Encyclopedia of Industrial Chemistry, Vol. A13, 5 th. Edition, 1989"). So sollte z. B. der Wasserstoffanteil des Rohgases bei Anwendung der Druckwechseladsorptionstechnik und einem Verfahren, welches herkömmliche Reformer benutzt, bei 40% liegen. Simulationen zeigen, daß dies mit dem erfindungsgemäßen Verfahren möglich ist.

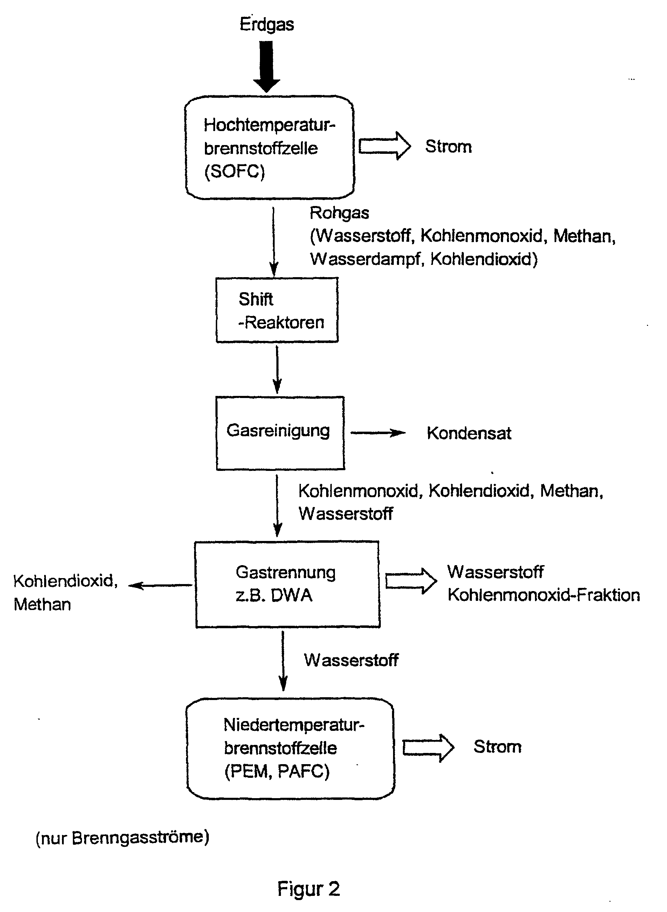

Figur 2 verdeutlicht eine weitere Ausführungsform der Erfindung.

Das verfahrensgemäß erzeugte Produkt Wasserstoff ist als Wertgas anzusehen, welches in der chemischen Industrie für zahlreiche Synthesen benutzt wird. Zudem bietet sich die Möglichkeit, Wasserstoff in nachgeschalteten Brennstoffzellenanlagen direkt zur weiteren Stromproduktion zu nutzen. Ein Verbundkraftwerk aus verschiedenen Brennstoffzellentypen ist sinnvoll. Ein solches Verbundkraftwerk weist vorteilhaft wenigstens einen Hochtemperaturbrennstoffzellenstapel, einen Shift-Reaktor (verfahrenstechnischer Apparat, in dem das im Abgas enthaltene Kohlenmonoxid entsprechend der Wassergasreaktion in Wasserstoff umgewandelt wird, Def. s. auch vorliegende Literaraturangabe: Ullmann's Encyclopedia), eine Gasreinigungseinheit für das Abgas des Hochtemperaturbrennstoffzellenstapels, einen PAFC- oder PEM-Brennstoffzellenstapel sowie einen Generator auf. Aus dem Rohstoff Erdgas werden die Wertprodukte Strom und Wasserstoff bzw. wasserstoffreiche Gase produziert. Im erfindungsgemäßen Hochtemperaturbrennstoffzellenstapel erfolgt die Wärmeabfuhr praktisch vollständig durch die interne Reformierung des anodenseitig geführten Brenngases.

Gegenüber den Verfahren zur bisherigen Wasserstofferzeugung werden deren Reformer durch den Hochtemperaturbrennstoffzellenstapel ersetzt. Somit entfällt die komplette Wärmebereitstellung für die bisherigen externen Reformer, da die Wärme durch die elektrochemischen Reaktionen im Hochtemperaturbrennstoffzellenstapel aufgebracht wird. Durch den Hochtemperaturbrennstoffzellenstapel wird ein Reformer bereitgestellt, der Strom erzeugt, welcher zur Deckung des Strombedarfes in einer Chemieanlage (wenn das Verfahrens in einer bestehenden Chemieanlage durchgeführt werden soll - z. B. Ersetzen eines Reformers durch eine SOFC zur Wasserstofferzeugung, wobei als "Nebenprodukt" Strom anfällt) herangezogen wird oder ferner Strom ins Netz einspeist. Die PEM- und/oder PAFC-Brennstoffzelleneinheiten zur Stromerzeugung werden rentabler, da Wasserstoff als "Abfallprodukt des Hochtemperaturbrennstoffzellenstapels" nach einer Gasaufbereitung genutzt wird.

In der folgenden Tabelle finden sich typische Betriebsdaten einer Hochtemperaturbrennstoffzelle, die erfindungsgemäß durch interne Reformierung gekühlt wird.

| | Kühlung durch Zugabe von Überschuß-Brennstoff, welcher intern direkt an der Anode reformiert wird |
|---|---|
| Mittlere Stromdichte [mA/cm$^2$] | 300 |
| Zellspannung [V] | 0,72 |
| Brenngasnutzungsgrad [%]: | 25,9 |
| Aktive Elektrodenfläche [cm$^2$] | 78,2 |
| Gaseintrittstemperaturen [°C] | 750 |
| Gesamtdruck [bar]: | 1,5 |
| Luft-Austrittstemperatur [°C] | 754 |
| Wasserdampf/Methan-Verhältnis | 3 |
| Vorreformierungsgrad [%] | 30 |
| Luftverhältnis [-] | 1,42 |
| | |
| Brenngasstrom [mol/h](Eintritt) | 2,091 |
| Molanteil (Eintritt) | |
| $CH_4$ | 0,131 |
| $H_2O$ | 0,494 |
| $H_2$ | 0,265 |
| CO | 0,024 |
| $CO_2$ | 0,053 |
| $N_2$ | 0,033 |
| Brenngasstrom [mol/h](Austritt) | 2,637 |
| Molanteil (Austritt) | |
| $CH_4$ | - |
| $H_2O$ | 0,405 |
| $H_2$ | 0,404 |
| CO | 0,074 |
| $CO_2$ | 0,091 |
| $N_2$ | 0,026 |

**Patentansprüche**

1. Verfahren zum Betreiben einer SOFC Hochtemperatur-Brennstoffzelle mit den Schritten:

   a) ein kohlenwasserstoffhaltiger Brennstoff wird in der Brennstoffzelle durch eine endotherme Reaktion intern und direkt an bzw. in der Anode in ein Synthesegas umgesetzt,

   b) das Synthesegas wird teilweise in der Brennstoffzelle durch eine exotherme elektrochemische Reaktion in Strom umgewandelt,

   c) der Brennstoff wird in einem derartigen Überschuß der Brennstoffzelle zugeführt, daß

   - bei einer vorgegebenen mittleren Stromdichte der Brennstoffnutzungsgrad unterhalb von 40 %, vorteilhaft bei unter 30 % liegt,

- die Temperaturdifferenz der Betriebsmittel zwischen Eintritt und Austritt in bzw. aus dem Anodenraum sowie in bzw. aus dem Kathodenraum nicht mehr als 20 °C, vorteilhaft nicht mehr als 10 °C beträgt und/oder

- der Sauerstoff nahezu stöchiometrisch entsprechend dem Bedarf zur Stromerzeugung der Brennstoffzelle zugeführt wird.

2. Verfahren nach vorhergehendem Anspruch, bei dem die Brennstoffzelle bei Temperaturen unterhalb von 700 °C, vorteilhaft bei Temperaturen unterhalb von 650 °C betrieben wird.

**Claims**

1. Method for operating an SOFC high-temperature fuel cell, comprising the following steps:

a) a hydrocarbon-bearing fuel is converted in the fuel cell into a synthesis gas by an endothermic reaction internally and directly on or in the anode,
b) part of the synthesis gas is converted into current in the fuel cell by an exothermic electrochemical reaction,
c) the fuel is supplied to the fuel cell in a surplus such that

- at a predetermined average current density the fuel consumption is below 40%, advantageously below 30%,
- the temperature difference of the operating materials between the entrance to and exit from the anode compartment and to/from the cathode compartment is not more than 20°C, advantageously not more than 10°C, and/or
- the oxygen is supplied to the fuel cell for current generation virtually stoichiometrically in accordance with the demand.

2. Method according to the preceding claim, wherein the fuel cell is operated at temperatures below 700°C, advantageously at temperatures below 650°C.

**Revendications**

1. Procédé pour faire fonctionner une pile à combustible à haute température SOFC comprenant les stades :

a) on transforme un combustible contenant des hydrocarbures dans la pile à combustible par une réaction endothermique de manière interne et directement sur ou dans l'anode en un gaz de synthèse,
b) on transforme le gaz de synthèse partiellement dans la pile à combustible par une réaction électrochimique exothermique en du courant électrique,
c) on apporte le combustible en un excès à la pile à combustible de façon que

- pour une densité du courant moyenne donnée à l'avance, le degré d'utilisation du combustible soit inférieur à 40 % et de préférence soit inférieur à 30 %,
- la différence de température du fluide de fonctionnement entre l'entrée et la sortie dans ou hors de la chambre anodique ainsi que dans ou hors de la chambre cathodique n'est pas supérieure à 20°C et avantageusement n'est pas supérieure à 10°C, et/ou
- on apporte de l'oxygène de manière pratiquement stoechiométrique en fonction des besoins pour la production du courant électrique à la pile à combustible.

2. Procédé suivant la revendication précédente dans lequel on fait fonctionner la pile à combustible à des températures inférieures à 700°C, de préférence à des températures inférieures à 650°C.

Erdgas

**⬇**

Hochtemperaturbrennstoffzelle
(SOFC) ⟹ Strom

Rohgas
(Wasserstoff, Kohlenmonoxid, Methan,
Wasserdampf, Kohlendioxid)

Shift
-Reaktoren

Gasreinigung ⟶ Kondensat

Kohlenmonoxid, Kohlendioxid, Methan,
Wasserstoff

Kohlendioxid, ⟵ Gastrennung z.B. DWA ⟹ Wasserstoff
Methan Kohlenmonoxid-Fraktion

⬇ Wasserstoff

(nur Brenngasströme)    Figur 1

Erdgas

Hochtemperaturbrennstoffzelle
(SOFC) ⟹ Strom

Rohgas
(Wasserstoff, Kohlenmonoxid, Methan,
Wasserdampf, Kohlendioxid)

Shift
-Reaktoren

Gasreinigung → Kondensat

Kohlenmonoxid, Kohlendioxid, Methan,
Wasserstoff

Kohlendioxid, ← Gastrennung
Methan       z.B. DWA ⟹ Wasserstoff
Kohlenmonoxid-Fraktion

Wasserstoff

Niedertemperaturbrennstoffzelle
(PEM, PAFC) ⟹ Strom

(nur Brenngasströme)

Figur 2